# EUROPEAN PATENT SPECIFICATION

(11) **EP 4 305 120 B1**
(45) Date of publication and mention of the grant of the patent: **17.07.2024**
(21) Application number: 22714638.8
(22) Date of filing: 25.03.2022
(51) Int. Cl.: C09J 197/00, C09J 189/00, B27N 3/00

(54) **ADHESIVE COMPOSITION COMPRISING LUPINE PROTEIN AND LIGNIN**
KLEBSTOFFZUSAMMENSETZUNG MIT LUPINENPROTEIN UND LIGNIN
COMPOSITION ADHÉSIVE COMPRENANT UNE PROTÉINE DE LUPIN ET DE LA LIGNINE

(30) Priority: 30.03.2021 SE 2150391
(43) Date of publication of application: 17.01.2024
(73) Proprietor: OrganoClick AB, 187 66 TÄBY (SE)
(72) Inventor: WENNMAN, Maria, 187 73 Täby (SE); DEMIRCAN, Deniz, 191 42 Sollentuna (SE)
(74) Representative: Bergenstråhle & Partners AB
(86) International application number: PCT/SE2022/050290
(87) International publication number: WO 2022/211700

(56) References cited:
- WO-A1-2015/092750
- WO-A2-2013/003675

## Description

### Technical field

The present invention relates generally to an aqueous adhesive composition comprising lignin and a source of lupine protein. The invention further relates to a method for gluing together two or more surfaces of a material using said aqueous adhesive composition, use of said aqueous adhesive composition and a material treated with said aqueous adhesive composition.

### Background art

Water-based adhesives, such as adhesives based on polyvinyl acetate, are increasingly popular due to their economic viability. However, most adhesives with high performance usually consist of synthetic polymers made from non-renewable resources such as for instance polyacrylates, polyurethanes and polyvinyl esters.

In an attempt to reduce the usage of synthetic polymers, the industry has turned its attention to lignin which is the second most prevalent biopolymer after cellulose. Previously, lignin was for long considered a by-product from the paper making process and was usually burned for its fuel value. In recent years, with the development of technologies enabling the extraction of highly purified lignin from the paper making process, lignin has been studied as an alternative to synthetic polymers due to its polyaromatic structure.

It is desirable that a water-based adhesive contains as low water content as possible. Water acts as a carrier of the binding component and needs to be removed during drying. Hence, a water-based adhesive with a low solid content will require a longer drying time of an adhesive treated material, and hence longer production time and tack time. Tack time is the time required for an adhesive to start exhibit adhesion, i.e. bonding, of two surfaces

When developing an aqueous adhesive composition made from renewable resources, it is desirable to develop a composition exhibiting similar solid contents and viscosity as conventional synthetic adhesives. If the solid content is lower than a conventional adhesive, the drying time will increase and hence lead to an increase in manufacturing costs. Another drawback of a low solid content is that the adhesive will not exhibit initial tack, which results in no adhesion. Moreover, if the viscosity is different, it might not be possible to use the newly developed adhesive with conventional equipment, as they are adapted to specific viscosity ranges. Therefore, these parameters are of great importance.

The usage of vegetable proteins in lignin-based adhesives is known. Previous attempts have been made to incorporate soy protein into lignin-based adhesives, such as in US 2010/0089287 A1 or US 2016/0333240 A1. However, due to soy protein's inability to achieve high solid contents in a dispersion due to viscosity concerns, these systems tend to have a lower solid content compared to conventional adhesives, thus resulting in a longer drying time. A solution has been to enzymatically modify the soy protein. However, this results in an expensive additional manufacturing step.

Lupine is a genus of about 200 species of plants in the pea family. They are extensively cultivated both as a food resource and as ornaments.

Previously, lupine protein has been used to reduce the amount of synthetic polymer in an aqueous based adhesive, see for instance US 2013/0252007 A1. However, the adhesive composition disclosed in this document still comprises a substantial amount of synthetic polymer.

Vidal et al "Evaluation of lupin flour (LF)-based adhesive for making sustainable wood materials" http://www.swst.org/meetings/AM10/ppts/Vidal.pdf, showed that lupine protein denaturated with urea combined with polyamideamine epichlorohydrin could exhibits similar characteristics as a conventional ureaformaldehyde resin.

Compositions of lignin and lupine have been used for instance to provide bactericidal compositions, see for instance application CN 109380243 A. However, CN 109380243 A does not discuss adhesive properties of a lignin-lupine based adhesive.

US 2013005867 A1 discloses different adhesive compositions used in preparation of lignocellulosic based composites. The adhesives are based on polyamidoamine-epichlorohydrin (PAE) type resins.

There is thus still a need for an aqueous adhesive composition comprising high amounts, or completely made of, renewable materials that exhibit similar characteristics as conventional synthetic aqueous adhesives.

### Summary of invention

An object of the present invention is to provide an environmentally friendly aqueous adhesive composition comprising a high amount, or completely made of, renewable materials.

It is also an object of the present invention to provide an environmentally friendly aqueous adhesive composition with as low water content as possible, thereby reducing the drying time of the adhesive and reducing manufacturing costs.

It is another object of the present invention to provide an aqueous adhesive composition exhibiting a short tack time.

It is another object of the present invention to provide an aqueous adhesive composition with improved flame retardancy compared to conventional aqueous adhesive compositions.

It is another object of the present invention to provide an aqueous adhesive composition that can dry at relatively low temperatures, for instance at room temperature.

It is still another object of the present invention to provide an aqueous adhesive composition that readily can form films with a suitable flexibility.

Any combination of the above objects is also possible.

In one general aspect, the invention relates to an aqueous adhesive composition comprising;
(a) lignin; and
(b) a source of lupine protein,
wherein the combined wt% of the lignin and the source of lupine protein in the aqueous adhesive composition is at least 30%, and wherein the weight ratio between the source of lupine protein and lignin in the aqueous adhesive composition is between 1:3 and 5:1, preferably between 1:2 and 3:1, even more preferably between 1:1 and 2:1. By an aqueous adhesive composition according to the present invention, an adhesive composition comprising a high amount, or completely made of, renewable materials is achieved. Furthermore, by combining lignin and a source of lupine protein in an aqueous adhesive composition, it has surprisingly been found that the composition will exhibit higher adhesive strength, i.e. energy at break, compared to an aqueous adhesive composition made of the individual components alone. Furthermore, it was found that an aqueous adhesive composition according to the present invention exhibits similar or higher energy at break values compared to conventional polyvinyl acetate glue. There is thus a synergistic effect in combining lupine protein with lignin.

By maintaining the combined wt% of the lignin and source of lupine protein in the aqueous adhesive composition to at least 30%, a sufficiently strong adhesive, i.e. energy at break, can be achieved while still exhibiting similar viscosities as conventional synthetic adhesives such as polyvinyl acetate.

The ratio between the source of lupine protein and lignin in the aqueous adhesive composition is an important parameter for controlling the required properties necessary for the intended use of the composition, such as strength parameters and/or flexibility. The Applicant has surprisingly found that by selecting a suitable ratio between the source of lupine protein and lignin according to the present invention, it was possible to control properties, such as strength and/or flexibility, of the adhesive composition depending on the desired use.

In the context of the present invention, lupine protein refers to protein from beans of plants in the legume family Fabaceae. The lupine protein may be provided in the form of lupine flour, containing from about 40 wt% to about 99 wt% of lupine protein.

It is important that the water content is as low as possible in an aqueous adhesive composition since the water acts as a carrier of the binding component and needs to be removed during a drying step. The more water to evaporate, the longer time for drying of the glue line, hence longer tack time. Furthermore, it is important that the aqueous adhesive composition exhibit similar viscosities to conventional glues. It was found that compared to other protein from leguminous plants, such as for instance soy, lupine protein could be added to water in a higher amount before the target viscosity, i.e. the viscosity of polyvinyl acetate, was achieved. Hence, more binding component can be added when using lupine protein instead of other protein from leguminous plants, such as soy for instance.

The aqueous adhesive composition is formed by mixing the components of the adhesive in any conventional way as described in prior art, for instance by combining liquid dispersions of the components, or by combining the substances in dry form and forming a dispersion.

In one aspect, the aqueous adhesive composition is a dispersion.

In one aspect, the weight ratio between the source of lupine protein and lignin in the aqueous adhesive composition is about 1:1. It was found that a weight ratio of about 1:1 between the source of lupine protein and lignin results in an adhesive with high energy at break values and good flexibility of the resulting adhesive film.

A flexible film is desirable as the formed film needs to be able to withstand mechanical movements within the glued material, as well as handling of the glued product. An inflexible film will break when subjected to mechanical movements and thus impair the adhesion of the glued material.

In one aspect, the weight ratio between the source of lupine protein and lignin in the aqueous composition is between 1:1 and 1:2.

In one aspect, the aqueous adhesive has a viscosity, measured with a Brookfield DV-II+Pro LV Viscometer together with Rheocal software using spindle LV64 at 100 RPM, of from about 2000 to about 5500 mPas, preferably from about 3000 to about 5500 mPAs, preferably from about 3500 to about 5500 mPAs, even more preferably from about 4000 to about 5000 mPas. By ensuring that the composition is within conventional viscosity ranges, the aqueous adhesive composition according to the present invention can be utilized as an alternative to conventional synthetic adhesive compositions exhibiting similar viscosity.

In one aspect, the source of lupine protein is in the form of a lupine flour comprising at least 40 wt% lupine protein, preferably at least 50 wt% lupine protein, even more preferably at least 55 wt% lupine protein. In one aspect, the source of lupine protein is in the form of a lupine flour comprising between 40 - 70 wt% lupine protein, preferably between 50 - 60 wt% lupine protein.

In one aspect, the combined wt% of the lignin and the source of lupine protein in the aqueous adhesive composition is at least 40%, preferably at least 45%, preferably at least 48%, preferably at least 50%. In one aspect, the combined wt% of the lignin and the source of lupine protein in the aqueous adhesive composition is about 50%.

In one aspect, the aqueous adhesive composition further comprises at least one additional compound selected from an acid, a base, a hardener, a filler, a pigment, a thickener, a defoaming agent, a softener, a preservative and/or a flame-retardant compound. Preferably, the at least one additional compound is selected from xanthan gum, glycerol and sorbitol. Said additional compound are selected depending on the application method and the expected properties of the final material, wherein the concentration of the additive is 0 - 30 wt%, more preferably 0 - 20 wt%, most preferably 0 - 10 wt%.

The hardener may be selected from one or more of tris(hydroxymethyl)nitromethane (TRIS), glyoxal (GLY), and hexamethylenetetramine (HEX) for instance.

The filler may be selected from one or more of gum arabic, konjac glucomannan, organic fillers such as wood flour, starch soy flour, olive seed flour, cork flour, corn cobs, rice brain husks, and inorganic fillers such as calcium carbonate, glass fibre, kaolin, talc and mice and other fillers known to the skilled person.

The preservative may be selected from one or more of fungicide, bactericide, pharmaceutical preservative, cosmetic preservative and food preservatives. The inclusion of a preservative helps to inhibit the growth of mold in the aqueous adhesive composition.

In one aspect, the aqueous adhesive composition further comprises a wet strength agent, preferably the wet strength agent is selected from at least one of starch, such as starch particles, granules or dissolved starch, synthetic binders, such as latex, modified biopolymers, such as modified starches, proteins, and other natural polysaccharides, such as sodium carboxymethyl cellulose, guar gum, chitosan and hemicelluloses.

In one aspect, the lignin is a lignin generated from the Kraft process, for instance alkaline lignin generated from the Kraft process, In one aspect, the alkaline lignin is used as a dispersion comprising between from about 45 to about 50% lignin solid content, or can be mixed in dry form. The lignin used can be purified to remove any remaining sulphur impurities.

In another general aspect, the present invention is directed to a method for adhering a first and a second surface together, comprising:
a) applying an aqueous adhesive composition as defined in any one of the previously mentioned aspects to at least one of said first or second surfaces;
b) placing said first and second surfaces in contact with each other, such that the aqueous adhesive composition is located between said surfaces;
c) optionally drying the contacted surfaces at a temperature of 10 to 175 degrees C, more preferably 10 to 160 degrees C, even more preferably 10 to 90 degrees C.

In one aspect, the drying is performed in a hot press at a temperature of 10 to 175 degrees C, preferably 20 to 160 degrees C, even more preferably 100 to 155 degrees C.

The aqueous adhesive composition is typically applied onto the surface by spraying, coating, brushing, ribbon application or liquid extrusion for instance.

The drying can be performed using any drying techniques such as microwave, IR, pulse, induction, air drying, Kiln-drying, Dehumidification, Vacuum-drying, Solar kiln, Water seasoning, Boiling or steam seasoning, Chemical or salt seasoning, Electrical seasoning, hot press and similar. The method can be performed in the absence or presence of vacuum, inert atmosphere, steam, or ambient atmosphere.

In one aspect, said first and/or second surfaces comprises or consist of a wood or cellulose material, a wood based or cellulose based composite material such as plywood, particle board, or fibre boards (i.e. LDF, MDF or HDF), moulding compounds such as pulp moulded products, cellulose based materials such as paper, paperboard, cardboard, carton, or corrugated fibreboard, nonwoven materials (e.g. airlaid, wetlaid, spunbond, spunlace, drylaid, etc.) made completely or partly of cellulosic (e.g. viscose) or wood fibres, textile made of cellulosic fibres such as cotton, linen, hemp, viscose, etc. A wood or cellulose based composite material might be made completely, or substantially, of wood or cellulose based materials.

The wooden material used with the present invention can be selected from, but are not limited to, e.g. spruce, pine, birch, oak, redwood, cedar or composite materials such as plywood, fibre boards, particle boards, or pulp-based materials such as paperboard, corrugated board, gypsum grade paperboard or moulded pulp products.

In one aspect, said first surface comprises or consist of a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials (e.g. airlaid, wetlaid, spunbond, spunlace, drylaid, etc.) made completely or partly of cellulosic (e.g. viscose) or wood fibres, textile made of cellulosic fibres such as cotton, linen, hemp, viscose, etc., and said second surface comprises or consist of a structural element such as a wall, floor or ceiling. This enables the adhesion of an object to a fixed structural element. The structural element can be an inside structural element or an outside structural element. A wood or cellulose based material might be made completely of, or substantially made of wood or cellulose based materials.

In one aspect, the aqueous adhesive composition is added in an amount of from about 80 g/m² to about 180 g/m² based on dry on, preferably from about 100 g/m² to about 150 g/m² based on dry on, and even more preferably from about 110 g/m² to about 130 g/m² based on dry on.

In one aspect, the drying results in physical curing of the aqueous adhesive composition. By physical curing, is meant the evaporation of the dispersive phase of the aqueous adhesive composition so to generate the phenomenon of adhesion and cohesion of the adhesive.

In another general aspect, the present invention is directed to a use of an aqueous adhesive composition as defined in any one of the previous aspects, for adhering a first and a second surface together. In one aspect, said first and/or second surfaces comprises or consist of a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials (e.g. airlaid, wetlaid, spunbond, spunlace, drylaid, etc.) made completely or partly of cellulosic (e.g. viscose) or wood fibres, textile made of cellulosic fibres such as cotton, linen, hemp, viscose, etc. A wood or cellulose based material might be made completely of, or substantially made of wood or cellulose based materials.

In one aspect, said first surface comprises or consist of a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials (e.g. airlaid, wetlaid, spunbond, spunlace, drylaid, etc.) made completely or partly of cellulosic (e.g. viscose) or wood fibres, textile made of cellulosic fibres such as cotton, linen, hemp, viscose, etc., and wherein said second surface comprises or consist of a structural element such as a wall, floor or ceiling. A wood or cellulose based material might be made completely of, or substantially made of wood or cellulose based materials.

In another general aspect, the present invention relates to a material treated with an aqueous composition as defined in any one of the previous aspects.

In one aspect, said material is a wood or cellulose based material, a wood based or cellulose based composite material, plywood, fibre board, particle board, molding compounds such as pulp moulded products, or cellulose based materials such as paper, paperboard, cardboard, carton or corrugated fibreboard, or nonwoven materials (e.g. airlaid, wetlaid, spunbond, spunlace, drylaid, etc.) made completely or partly of cellulosic (e.g. viscose) or wood fibres, or textile made of cellulosic fibres such as cotton, linen, hemp, viscose, etc.

### Description of embodiments

In the following, a detailed description of the present invention is provided.

As used herein, "wt%" refers to weight percent of the ingredient, or ingredients, referred to of the total weight of the compound or composition referred to.

As used herein in the present experiments, "solid content" refers to the percent of the ingredient, or ingredients, referred to left in the composition once the volatile solvent, e.g. water, has vaporized, and is for example the combined wt% of lignin and source of lupine protein.

As used herein, "about" refers to a measurable value, such as an amount, meant to encompass variations of +/-10% or less, preferably +/-5% or less, even more preferably +/-1% or less, and still more preferably +/-0.1% or less of and from the specified value, in so far the skilled person understands that such variations are appropriate to perform in the disclosed invention. However, it is to be understood that the value to which "about" refers to is itself also specifically disclosed.

### Chemicals

Chemicals used for the present invention are listed in Table 1. Moreover, Polyvinylacetate (PVAc) glue was used as reference glue material. HCl and white pigment (titanium dioxide) were used as additives.

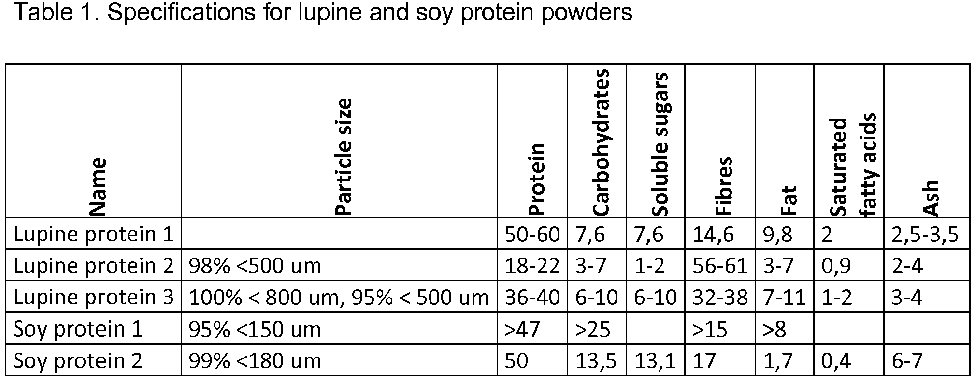

### Equipment

All equipment used in the following examples are listed below.
- pH in formulations was measured with pHenomenal pH1000H from VWR with Hamilton Polilyte Lab Temp BNC electrode (calibrated with buffers pH 4, 7 and 10).
- T-peel tests were conducted using Testometric M250-2.5AT (machine capacity 2.5 kN) together with Wintest Analysis software.
- The adhesive formulations were prepared by using IKA Werke under at 1000 rpm for 30 minutes.
- Viscosity of formulations were measured with Brookfield DV-II+ Pro LV Viscometer together with Rheocal software using spindle LV64 at 100 rpm.

### Methods

In the following section, all methods referred to in the examples are described.
- Method A: Two layers of the biocomposite material OrganoComp^{™} with the dimensions of 2 cm * 10 cm was glued together by spreading the adhesive composition over an area of 2 cm * 6 cm on the edges of the substrate. The two substrates were then assembled and pressed. 120 g/m2 glue was applied based on dry add-on.
- Method B: A flame was held vertical to the film for 10 seconds and then removed. Waiting time before the flame was held towards the material again was 10-15 seconds. The number of repetitions before the material started to burn is reported as the flame score. If no fire in the material was observed after seventh repetition, the test was stopped. Hence, the best flame score is 7.
- Method C: 180-degree T-peel test. Specimen were produced according to Method A and mounted between the clamps in Testometric M250-2.5AT (load cell: 250 kgf) after having test specimens for at least 20 h in 23 °C and 50 % RH. The distance between the clamps was 7 cm and crosshead speed was 140 mm/min. The test was finished when the specimens were entirely peeled off. The test is adapted from Standard Test Method for Peel Resistance of Adhesives (T-Peel Test), D 1876.
- Method D: The adhesive composition was spread on petri dish and left overnight for air drying.
- Method E: Two layers of cardboard with the dimensions of 500 * 1000 cm was glued together by applying a thin layer of adhesive with a brush and then the two layers were assembled. The construction was put under 0.3 bar for 4 min.
- Method F: Two layers of wood veneers with the dimension of 2 cm * 10 cm was glued together by gluing 2 cm * 2 cm area on one edge of one veneer, and then two veneers were assembled and pressed under 2 kg at 150 °C for 3 min. 120 g/m2 adhesive was applied based on dry add-on. Veneers were conditioned before gluing for 24 h at 23 °C and 50 % RH.
- Method G: Dry strength. Specimens were prepared according to the Method F and mounted between the clamps in Testometric M250-2.5AT (load cell: 250 kgf) after having test specimens for minimum 24 h at 23 °C and 50 % RH. The distance between the clamps was 10 cm and crosshead speed was 25 mm/min.

### Experiments

The following sector contains experiments that support the invention.

Experiment 1. Evaluating proteins and their combinations with lignin. Method A was used to compare lupin protein, soy protein and lignin (separate and in combination) to commercial PVAc glue. As high solid content as possible was used. Hence, the different proteins have different capacity of forming high concentrated formulations. Method C was used for evaluation the test specimen. Results are shown in Table 2.

**Table 2. Water dispersions of proteins and their combinations with lignin. Adhesive strength of different adhesive formulations.**

| **Adhesive dispersion (solid content, %)** | **Ratio Protein to Lignin** | **Energy at Break (Nm)** |
|---|---|---|
| Lignin (48 %) | | 0,01 |
| Lupine protein 1 (50 %) | | 0,11 |
| Lupine protein 2 (33 %) | | 0,01 |
| Lupine protein 3 (33 %) | | 0,08 |
| Lupine protein 1 / Lignin + HCl (50 %) | 1:1 | 0,26 |
| Lupine protein 1/ Lignin (45 %) | 1:1 | 0,27 |
| Lupine protein 1 / Lignin (45 %) | 3:1 | 0,67 |
| Lupine protein 1 / Lignin (45 %) | 5:1 | 0,15 |
| Lupine protein 1 / Lignin (45 %) | 1:3 | 0,12 |
| Soy protein 1 / Lignin (39%) | 1:1 | 0,01 |
| Soy protein 2 / Lignin (3 %) | 1:1 | 0,31 |
| Lupine protein 2/ Lignin (39 %) | 1:1 | 0,05 |
| Lupine protein 3/ Lignin (39%) | 1:1 | 0,07 |
| Lupine protein 1 / Lignin / Pigment (57 %) | 8:8:1 | 0.51 |
| PVAc (50 %) | | 0,15 |

The data from Table 2 shows that lupine protein itself and in combination with lignin can be produced with as high solid content as PVAc glue.

Different lignin to lupine ratios were mixed and tested to achieve the best glue strength. The dispersion with higher lignin content (1:3) exhibited the best glue performance both in terms of strength and film forming property. Besides those, the flame score was good (see Experiment 3) which is an advantage when it comes to flame retardant glue applications. Also increasing up the lignin to lupine ratio from 1:1 to 3:1 is a plus since the larger part of the adhesive is from a non-food sourced sustainable feedstock.

The data from Table 2 shows that there is a synergistic effect between lignin and lupine protein. All the combinations of lupine protein and lignin has higher energy at break than that of the commercial synthetic adhesive. The effect of mixing lupine protein with lignin on adhesive strength is significantly higher than mixing soy protein with lignin for one version of soy protein but for the other version of soy protein, the glue line is as strong for the lupin mixture as for the soy protein mixture. However, for the best soy protein mixed with lignin there are several drawbacks. One is that the solid content which is limited to 39 % due to the high viscosity. The other is the brittleness in the film (see Experiment 2). Together, the two drawbacks will limit the use of such adhesive dramatically.

Colouring the brown lignin/lupine adhesive with white pigment yield three better adhesive property such as better shear strength, higher dry content and a whiter adhesive. On the other hand, viscosity was decreased while solid content was increased. The low viscosity helps with better penetration ability of substrate (better wetting) and hence exhibit better gluing. And high dry content is an advantage since it shortens drying time.

### Experiment 2. Film forming property

Film formation ability is crucial for adhesives in most cases. To investigate the glue line by the film forming property, Method D was used to prepare films. Table 3 includes comments about the appearance of different films.

**Table 3. Comments on films prepared of the dispersions**

| **Adhesive dispersion (solid content%)** | **Ratio protein to lignin** | **Comment** |
|---|---|---|
| Lignin (48 %) | | Brittle |
| Lupine protein (50 %) | | Brittle |
| Lupine protein 1 / Lignin + hydrochloric acid (45 %) | 1:1 | Flexible. 180 degree bending without break. |
| Lupine protein 1/ Lignin (45 %) | 1:1 | Flexible. 180 bending without break. |
| Lupine protein 1 / Lignin (45 %) | 3:1 | Brittle |
| Lupine protein 1 / Lignin (45 %) | 5:1 | Brittle |
| Lupine protein 1 / Lignin (45 %) | 1:3 | Flexible. 180 degree bending without break. |
| Lupine protein 1/ Lignin / pigment (57%) | 8:8:1 | Flexible. 180 degree bending without break. |
| PVAc (50 %) | | Flexible. 180 degree bending without break. |
| Lupine protein 3 (33 %) | | Brittle |
| Lupine protein 3/ Lignin (39 %) | 1:1 | Brittle |
| Lupine protein 2 (33 %) | | Brittle |
| Lupine protein 2 / Lignin (39%) | 1:1 | Brittle |
| Soy protein 1, (33 %) | | Brittle |
| Soy protein 1 / Lignin (39 %) | 1:1 | Brittle |
| Soy Protein 2 (33 %) | | Brittle |
| Soy protein 2 / Lignin (39 %) | 1:1 | Brittle |

The conclusion from this test was that the biobased adhesive based on the combination between lupine protein and lignin can be produced with the same advantage of being flexible and tough as a plastic PVAc glue.

### Experiment 3. Flame retardancy

To study the inherent flame-retardant property of the different dispersion, a flame test according to Method B was performed. Films for the test were produced according to Method D. Results are seen in Table 4.

**Table 4. Flame test on glue films.**

| **Adhesive films** | **Ratio protein to lignin** | **Flame score** |
|---|---|---|
| Lignin | - | 7 |
| Lupine protein 1 | - | 1 |
| Lupine protein 1 / Lignin + hydrochloric acid | 1:1 | 4 |
| Lupine protein 1 / Lignin | 1:1 | 4 |
| Lupine protein 1 / Lignin | 3:1 | 4 |
| Lupine protein 1 / Lignin | 5:1 | 4 |
| Lupine protein 1 / Lignin | 1:3 | 7 |
| PVAc | | 1 |

From Table 4 it is obvious that the lignin contributes with flame retardancy to the adhesive which is beneficial in many applications. A flame-retardant adhesive is of high interest in construction and decorative products for indoor use.

### Experiment 4. Viscosity measurements

It is important to reach the same viscosity with similar solid content as for synthetic PVAc glue to be able to use the biobased adhesive as a "drop in" candidate for existing equipment used in different industries. Table 5 below shows measured solid content and viscosities.

**Table 5. Solid content and viscosity for different adhesives**

| **Adhesive dispersion** | **Solid content** | **Ratio protein to lignin** | **Viscosity at 100 rpm, spindel LV64 (mPas)** |
|---|---|---|---|
| Lignin | 48 | | 30000 |
| Lupine protein 1 | 50 | | Out of range |
| Lupine protein 1 / Lignin | 45 | 1:1 | 4180 |
| Lupine protein 1 / Lignin | 48 | 1:1 | 22000 |
| Lupine protein 1 / Lignin | 45 | 1:3 | 23155 |
| Lupine protein 1/ Lignin | 48 | 1:3 | 28000 |
| Lupine protein 1/ Lignin / Pigment | 57 | 8:8:1 | 1824 |
| PVAc | 52 | | 4000-5000 |

Based on the Table 5, it can be concluded that it is possible, with small adjustments on the solid content, to tune the viscosity for a certain technique or equipment of application (spraying, rolling etc).

### Experiment 5. Gluing larger objects

Not only small lab samples need to pass the gluing test to confidently say that the glue has properties similar to synthetic PVAc glue. For this reason, cardboard panels with the dimension of 500 cm * 1000 cm OrganoComp^{™} were glued according to Method E. The combination of Lupine protein 1: Lignin with ratio 1:1 with 48-50 % solid content was used. When tearing the two panels apart, fibre tear was observed. On the other hand, for the commercial PVAc glue no fibre tear was observed. For panels glued with pigmented glue (Lupine protein 1: Lignin: pigment with ratio 8:8:1) with 50 % solid content, it was hard to even initiate failure test which eventually resulted in material break rather than fibre tear. The conclusion was that larger objects are possible to glue with the same performance as synthetic glues.

### Experiment 6. Wood gluing

Wood veneers bonded with PVAc and Lupine protein 1: Lignin with ratio 1:1 (45 %) was prepared according to Method F. Tensile shear strengths of the wood veneers were determined according to the Method G. See the results in Table 6.

**Table 6. The tensile shear strength of veneers bonded with Lupine protein 1 / Lignin and PVAc.**

| **Adhesive dispersion** | **Ratio protein to lignin** | **Tensile shear strength (MPa)** |
|---|---|---|
| Lupine protein 1 / Lignin | 1:1 | 1,2 |
| PVAc | - | 1,1 |

The test shows that the biobased glue is as strong as the commercial PVAc glue for wooden substrates.

## Claims

1. An aqueous adhesive composition comprising;
(a) lignin; and
(b) a source of lupine protein,
wherein the combined wt% of the lignin and source of lupine protein in the aqueous adhesive composition is at least 30%, and wherein the weight ratio between the source of lupine protein and lignin in the aqueous adhesive composition is between 1:3 and 5:1, preferably between 1:2 and 3:1, even more preferably between 1:1 and 2:1.

2. The aqueous adhesive composition according to claim 1, wherein the weight ratio between the source of lupine protein and lignin in the aqueous composition is between 1:1 and 1:2.

3. The aqueous adhesive composition according to any of the previous claims, wherein the aqueous adhesive has a viscosity, measured with a Brookfield DV-II+Pro LV Viscometer together with Rheocal software using spindle LV64 at 100 RPM, of from about 2000 to about 5500 mPas, preferably from about 3000 to about 5500 mPAs, preferably from about 3500 to about 5500 mPAs, even more preferably from about 4000 to about 5000 mPas.

4. The aqueous adhesive composition according to any of the previous claims, wherein the source of lupine protein is in the form of a lupine flour comprising at least 40 wt% lupine protein, preferably at least 50 wt% lupine protein, even more preferably at least 55 wt% lupine protein.

5. The aqueous adhesive composition according to any of the previous claims, wherein the combined wt% of the lignin and source of lupine protein in the aqueous adhesive composition is at least 40%, preferably at least 45%, preferably at least 48% and even more preferably about 50%.

6. The aqueous adhesive composition according to any of the previous claims, wherein the aqueous adhesive composition further comprises at least one additional compound selected from an acid, a base, a hardener, a thickener, a curing agent, a filler, a pigment, a defoaming agent, a softener and a flame-retardant compound, preferably the at least one additional compound is selected from xanthan gum, glycerol and sorbitol.

7. The aqueous adhesive composition according to any of the previous claims, wherein the aqueous adhesive composition further comprises a wet strength agent, preferably the wet strength agent is selected from at least one of starch, such as starch particles, granules or dissolved starch, synthetic binders, such as latex, modified biopolymers, such as modified starches, proteins, and other natural polysaccharides, such as sodium carboxymethyl cellulose, guar gum, chitosan and hemicelluloses.

8. A method for adhering a first and a second surface together, comprising:
a) applying an aqueous adhesive composition as defined in any one of claims 1 - 7 to at least one of said first or second surfaces;
b) placing said first and second surfaces in contact with each other, such that the aqueous adhesive composition is located between said surfaces;
c) optionally drying the contacted surfaces at a temperature of 10 to 175 degrees C, more preferably 10 to 160 degrees C, even more preferably 10 to 90 degrees C.

9. The method according to claim 8, wherein the drying is performed in a hot press at a temperature of 10 to 175 degrees C, preferably 20 to 160 degrees C, even more preferably 100 to 155 degrees C.

10. The method according to any one of claim 8-9, wherein said first and/or second surfaces comprises or consist of a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials made completely or partly of cellulosic or wood fibres, textile made of cellulosic fibres.

11. The method according to any one of claims 8-9, wherein said first surface comprises or consist of a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials made completely or partly of cellulosic or wood fibres, textile made of cellulosic fibres, and wherein said second surface comprises or consist of a structural element such as a wall, floor or ceiling.

12. The method according to any one of claims 8 - 11, wherein the aqueous adhesive composition is added in an amount of from about 80 g/m2 to about 180 g/m2 based on dry on.

13. Use of an aqueous adhesive composition as defined in any one of claims 1 - 7, for adhering a first and a second surface together.

14. A material treated with an aqueous composition as defined in any one of claims 1 - 7.

15. The material according to the previous claim, wherein said material is a wood or cellulose material, a wood based or cellulose based composite material such as plywood, fibre board, or particle board, molding compounds such as pulp moulded products, cellulose based materials such as paper, paperboard, cardboard, carton, or corrugated fibreboard, nonwoven materials made completely or partly of cellulosic or wood fibres, textile made of cellulosic fibres.

## Patentansprüche

1. Wässrige Klebstoffzusammensetzung, umfassend:
a) Lignin; und
b) eine Quelle für Lupinenprotein,
wobei der kombinierte Gew.-% von Lignin und Quelle für Lupinenprotein in der wässrigen Klebstoffzusammensetzung mindestens 30 % beträgt, und wobei das Gewichtsverhältnis zwischen der Quelle für Lupinenprotein und Lignin in der wässrigen Klebstoffzusammensetzung zwischen 1:3 und 5:1, bevorzugt zwischen 1:2 und 3:1, noch bevorzugter zwischen 1:1 und 2:1 liegt.

2. Wässrige Klebstoffzusammensetzung nach Anspruch 1, wobei das Gewichtsverhältnis zwischen der Quelle für Lupinenprotein und Lignin in der wässrigen Zusammensetzung zwischen 1:1 und 1:2 beträgt.

3. Wässrige Klebstoffzusammensetzung nach einem der vorstehenden Ansprüche, wobei der wässrige Klebstoff eine mit einem Brookfield DV-II+Pro LV-Viskosimeter zusammen mit Rheocal-Software unter Verwendung der Spindel LV64 bei 100 U/min gemessene Viskosität von etwa 2000 bis etwa 5500 mPas, bevorzugt von etwa 3000 bis etwa 5500 mPas, bevorzugter von etwa 3500 bis etwa 5500 mPas, noch bevorzugter von etwa 4000 bis etwa 5000 mPas aufweist.

4. Wässrige Klebstoffzusammensetzung nach einem der vorstehenden Ansprüche, wobei die Quelle für Lupinenprotein in Form eines Lupinenmehls vorliegt, welches mindestens 40 Gew.-% Lupinenprotein, bevorzugt mindestens 50 Gew.-% Lupinenprotein, noch bevorzugter mindestens 55 Gew.-% Lupinenprotein umfasst.

5. Wässrige Klebstoffzusammensetzung nach einem der vorstehenden Ansprüche, wobei der kombinierte Gew.-% vom Lignin und Quelle für Lupinenprotein in der wässrigen Klebstoffzusammensetzung mindestens 40 %, bevorzugt mindestens 45 %, bevorzugt mindestens 48 % und noch bevorzugter etwa 50 % beträgt.

6. Wässrige Klebstoffzusammensetzung nach einem der vorstehenden Ansprüche, wobei die wässrige Klebstoffzusammensetzung weiter mindestens eine zusätzliche Verbindung umfasst, die aus einer Säure, einer Base, einem Härter, einem Verdickungsmittel, einem Härtungsmittel, einem Füllstoff, einem Pigment, einem Schaumverhüter, einem Weichmacher und einer flammhemmenden Verbindung ausgewählt ist, wobei die mindestens eine zusätzliche Verbindung bevorzugt aus Xanthangummi, Glycerin und Sorbitol ausgewählt ist.

7. Wässrige Klebstoffzusammensetzung nach einem der vorstehenden Ansprüche, wobei die wässrige Klebstoffzusammensetzung weiter ein Nassfestmittel umfasst, wobei das Nassfestmittel bevorzugt aus mindestens einem von Stärke, wie Stärkepartikel, - granulat oder gelöster Stärke, synthetischen Bindemitteln, wie Latex, modifizierten Biopolymeren, wie modifizierte Stärken, Proteinen und anderen natürlichen Polysacchariden, wie Natriumcelluloseglycolat, Guarkernmehl, Chitosan und Hemicellulosen ausgewählt ist.

8. Verfahren zum Zusammenhaften einer ersten und einer zweiten Oberfläche, umfassend:
a) Aufbringen einer wässrigen Klebstoffzusammensetzung wie in einem der Ansprüche 1-7 definiert auf mindestens eine der ersten oder zweiten Oberfläche;
b) Inkontaktbringen der ersten und zweiten Oberfläche miteinander, sodass sich die wässrige Klebstoffzusammensetzung zwischen den Oberflächen befindet;
c) optional Trocknen der kontaktierten Oberflächen bei einer Temperatur von 10 bis 175 Grad C, bevorzugter 10 bis 160 Grad C, noch bevorzugter 10 bis 90 Grad C.

9. Verfahren nach Anspruch 8, wobei das Trocknen in einer Heißpresse bei einer Temperatur von 10 bis 175 Grad C, bevorzugt 20 bis 160 Grad C, noch bevorzugter 100 bis 155 Grad C durchgeführt wird.

10. Verfahren nach einem der Ansprüche 8-9, wobei die erste und/oder zweite Oberfläche ein Holz- oder Zellulosematerial, ein Verbundmaterial auf Holz- oder Zellulosebasis wie Sperrholz, Faserplatten oder Spanplatten, Formmassen wie Zellstoffformprodukte, Materialien auf Zellulosebasis wie Papier, Pappe, Kartonpapier, Karton oder Wellfaserplatte, Vliesmaterialien, welche vollständig oder teilweise aus Zellulose- oder Holzfasern bestehen, Textilien aus Zellulosefasern umfassen oder daraus bestehen.

11. Verfahren nach einem der Ansprüche 8-9, wobei die erste Oberfläche ein Holz- oder Zellulosematerial, ein Verbundmaterial auf Holz- oder Zellulosebasis wie Sperrholz, Faserplatten oder Spanplatten, Formmassen wie Zellstoffformprodukte, Materialien auf Zellulosebasis wie Papier, Pappe, Kartonpapier, Karton oder Wellfaserplatte, Vliesmaterialien, welche vollständig oder teilweise aus Zellulose- oder Holzfasern bestehen, Textilien aus Zellulosefasern umfasst oder daraus besteht, und wobei die zweite Oberfläche ein Strukturelement wie eine Wand, ein Boden oder eine Decke umfasst oder daraus besteht.

12. Verfahren nach einem der Ansprüche 8-11, wobei die wässrige Klebstoffzusammensetzung in einer Menge von etwa 80 g/m2 bis etwa 180 g/m2 basierend auf Trocknung hinzugefügt wird.

13. Verwendung einer wässrigen Klebstoffzusammensetzung wie in einem der Ansprüche 1-7 definiert zum Zusammenhaften einer ersten und einer zweiten Oberfläche.

14. Mit einer wässrigen Zusammensetzung wie in einem der Ansprüche 1-7 definiert behandeltes Material.

15. Material nach dem vorstehenden Anspruch, wobei das Material ein Holz- oder Zellulosematerial, ein Verbundmaterial auf Holz- oder Zellulosebasis wie Sperrholz, Faserplatten oder Spanplatten, Formmassen wie Zellstoffformprodukte, Materialien auf Zellulosebasis wie Papier, Pappe, Kartonpapier, Karton oder Wellfaserplatte, Vliesmaterialien, welche vollständig oder teilweise aus Zellulose- oder Holzfasern bestehen, Textilien aus Zellulosefasern ist.

## Revendications

1. Composition adhésive aqueuse comprenant :
a) de la lignine ; et
b) une source de protéine de lupin,
dans laquelle le % en poids combiné de la lignine et de la source de protéine de lupin dans la composition adhésive aqueuse est au moins 30 % et dans laquelle le rapport pondéral entre la source de protéine de lupin et la lignine dans la composition adhésive aqueuse est entre 1:3 et 5:1, préférentiellement entre 1:2 et 3:1, encore plus préférentiellement entre 1:1 et 2:1.

2. Composition adhésive aqueuse selon la revendication 1, dans laquelle le rapport pondéral entre la source de protéine de lupin et la lignine dans la composition aqueuse est entre 1:1 et 1:2.

3. Composition adhésive aqueuse selon l'une quelconque des revendications précédentes, dans laquelle l'adhésif aqueux présente une viscosité, mesurée avec un Viscosimètre Brookfield DV-II+Pro LV conjointement avec un logiciel Rheocal à l'aide d'une broche LV64 à 100 tr/min, d'environ 2000 à environ 5500 mPas, préférentiellement d'environ 3000 à environ 5500 mPA, préférentiellement d'environ 3500 à environ 5500 mPA, encore plus préférentiellement d'environ 4000 à environ 5000 mPas.

4. Composition adhésive aqueuse selon l'une quelconque des revendications précédentes, dans laquelle la source de protéine de lupin est sous la forme d'une farine de lupin comprenant au moins 40 % en poids de protéine de lupin, préférentiellement au moins 50 % en poids de protéine de lupin, encore plus préférentiellement au moins 55 % en poids de protéine de lupin.

5. Composition adhésive aqueuse selon l'une quelconque des revendications précédentes, dans laquelle le % en poids combiné de la lignine et de la source de protéine de lupin dans la composition adhésive aqueuse est au moins 40 %, préférentiellement au moins 45 %, préférentiellement au moins 48 % et encore plus préférentiellement environ 50 %.

6. Composition adhésive aqueuse selon l'une quelconque des revendications précédentes, dans laquelle la composition adhésive aqueuse comprend en outre au moins un composé supplémentaire choisi parmi un acide, une base, un durcisseur, un épaississant, un agent de durcissement, une charge, un pigment, un agent antimousse, un adoucissant et un composé ignifuge, préférentiellement le au moins un composé supplémentaire est choisi parmi la gomme xanthane, le glycérol et le sorbitol.

7. Composition adhésive aqueuse selon l'une quelconque des revendications précédentes, dans laquelle la composition adhésive aqueuse comprend en outre un agent résistant à l'humidité, préférentiellement l'agent résistant à l'humidité est choisi parmi au moins un parmi l'amidon, tel que des particules d'amidon, des granulés ou de l'amidon dissous, des liants synthétiques, tels que le latex, des biopolymères modifiés, tels que des amidons modifiés, des protéines et d'autres polysaccharides naturels, tels que la carboxyméthylcellulose sodique, la gomme guar, le chitosane et les hémicelluloses.

8. Procédé pour coller ensemble une première et une seconde surface, comprenant :
a) l'application d'une composition adhésive aqueuse telle que définie dans l'une quelconque des revendications 1 - 7 sur au moins l'une desdites première ou seconde surfaces ;
b) le placement desdites première et seconde surfaces en contact l'une avec l'autre de telle sorte que la composition adhésive aqueuse soit située entre lesdites surfaces ;
c) facultativement le séchage des surfaces en contact à une température de 10 à 175 degrés C, plus préférentiellement de 10 à 160 degrés C, encore plus préférentiellement de 10 à 90 degrés C.

9. Procédé selon la revendication 8, dans lequel le séchage est effectué dans une presse à chaud à une température de 10 à 175 degrés C, préférentiellement de 20 à 160 degrés C, encore plus préférentiellement de 100 à 155 degrés C.

10. Procédé selon l'une quelconque des revendications 8-9, dans lequel lesdites première et/ou seconde surfaces comprennent ou se composent d'un matériau en bois ou en cellulose, d'un matériau composite à base de bois ou à base de cellulose tel que du contreplaqué, d'un panneau de fibres ou d'un panneau de particules, de composés de moulage tels que des produits moulés en pâte à papier, de matériaux à base de cellulose tels que du papier, du papier cartonné, du cartonnage, du carton ou du carton ondulé, de matériaux non tissés entièrement ou partiellement composés de fibres cellulosiques ou de fibres de bois, de textiles constitués de fibres cellulosiques.

11. Procédé selon l'une quelconque des revendications 8-9, dans lequel ladite première surface comprend ou se compose d'un bois ou d'un matériau cellulosique, d'un matériau composite à base de bois ou à base de cellulose tel que du contreplaqué, d'un panneau de fibres ou un panneau de particules, de composés de moulage tels que des produits moulés de pâte à papier, de matériaux à base de cellulose tels que du papier, du papier cartonné, du cartonnage, du carton ou du carton ondulé, de matériaux non tissés composés entièrement ou partiellement de fibres cellulosiques ou de bois, de textiles constitués de fibres cellulosiques, et dans lequel ladite seconde surface comprend ou se compose d'un élément structurel comme un mur, un sol ou un plafond.

12. Procédé selon l'une quelconque des revendications 8 - 11, dans lequel la composition adhésive aqueuse est ajoutée en une quantité d'environ 80 g/m2 à environ 180 g/m2 à base de sec.

13. Utilisation d'une composition adhésive aqueuse telle que définie dans l'une quelconque des revendications 1 - 7, pour faire adhérer ensemble une première et une seconde surface.

14. Matériau traité avec une composition aqueuse telle que définie dans l'une quelconque des revendications 1 - 7.

15. Matériau selon la revendication précédente, dans lequel ledit matériau est un matériau en bois ou en cellulose, un matériau composite à base de bois ou à base de cellulose tel que du contreplaqué, un panneau de fibres ou un panneau de particules, des composés de moulage tels que des produits moulés en pâte à papier, des matériaux à base de cellulose tels que du papier, du papier cartonné, du cartonnage, du carton ou du carton ondulé, des matériaux non tissés composés entièrement ou partiellement de fibres cellulosiques ou de bois, de textiles composés de fibres cellulosiques.
